# EUROPEAN PATENT APPLICATION

(11) **EP 4 745 875 A1**
(43) Date of publication of application: **20.05.2026**
(21) Application number: 24839397.7
(22) Date of filing: 13.06.2024
(51) Int. Cl.: G06T 5/70, G06T 7/00, H04N 23/60

(54) **IMAGE PROCESSING DEVICE**

(30) Priority: 13.07.2023 JP 2023115444
(71) Applicant: Canon Denshi Kabushiki Kaisha, Chichibu-shi, Saitama 369-1892 (JP)
(72) Inventor: HIDAKA, Naoya, Chichibu-shi, Saitama 369-1892 (JP)
(74) Representative: TBK
(86) International application number: PCT/JP2024/021448
(87) International publication number: WO 2025/013501

(57) **Abstract**

An image processing apparatus generates a learning model that reduces noise contained in an image acquired by a predetermined image capturing apparatus. Extraction means extracts, as a noise image, an image of an optical black region that is included in each of a plurality of images captured by the predetermined image capturing apparatus and is not irradiated with light that has passed through an optical system of the predetermined image capturing apparatus. Compositing means composites the noise image with a teacher image to generate a student image. Training means trains the learning model by providing the student image to the learning model as input.

## Description

### TECHNICAL FIELD

The present invention relates to an image processing apparatus.

### BACKGROUND ART

Images acquired by digital cameras and the like may contain noise. Conventionally, such noise has been reduced by digital filters and the like. In recent years, it has been proposed to train a learning model on noise and use the trained learning model to reduce noise in images (Patent Literature 1).

### CITATION LIST

### PATENT LITERATURE

PTL1: Japanese Patent Laid-Open No. 2021-086284

### SUMMARY OF INVENTION

### TECHNICAL PROBLEM

Patent Literature 1 proposes computing noise to be added to a teacher image, based on International Organization for Standardization (ISO) sensitivity, and adding the computed noise to the teacher image to generate a training image (student image). This is advantageous in that a large number of student images are obtained. On the other hand, noise (thermal noise) that occurs dependent on the temperature of the image sensor and bright spot noise that occurs due to incidence of radiation such as cosmic radiation can be dependent on individual product differences between image sensors. Preparing noise equations for each individual difference is extremely difficult. In view of this, an object of the present invention is to provide a learning model capable of reducing noise more easily and accurately than was previously possible.

### SOLUTION TO PROBLEM

The present invention provides, for example, an image processing apparatus for generating a learning model that reduces noise contained in an image acquired by a predetermined image capturing apparatus, the image processing apparatus including: extraction means for extracting, as a noise image, an image of an optical black region that is included in each of a plurality of images captured by the predetermined image capturing apparatus and is not irradiated with light that has passed through an optical system of the predetermined image capturing apparatus; compositing means for compositing the noise image with a teacher image to generate a student image; and training means for training the learning model by providing the student image to the learning model as input, such that a difference between an output image that is output from the learning model and the teacher image decreases.

### ADVANTAGEOUS EFFECTS OF INVENTION

According to the present invention, a learning model capable of reducing noise more easily and accurately than was previously possible is provided.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an image processing system.
FIG. 2 is a diagram illustrating an image capturing apparatus.
FIG. 3 is a diagram illustrating an information processing apparatus.
FIG. 4 is a diagram illustrating a developing unit.
FIG. 5 is a diagram illustrating a teacher image generation apparatus.
FIG. 6 is a diagram illustrating a training processing apparatus.
FIG. 7 is a diagram illustrating a student image generation apparatus.
FIG. 8 is a diagram illustrating demosaic processing.
FIG. 9 is a diagram illustrating a method of cutting out noise regions.
FIG. 10 is a diagram illustrating a method of cutting out noise regions.
FIG. 11 is a diagram illustrating a method of adding noise.
FIG. 12 is a diagram illustrating a method of adding noise.
FIG. 13 is a diagram illustrating a method of adding noise.
FIG. 14 is a diagram illustrating a training method.
FIG. 15 is a diagram illustrating a method of generating a student image.
FIG. 16 is a diagram illustrating a student image generation apparatus.
FIG. 17 is a diagram illustrating effects.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (1) Image Processing System

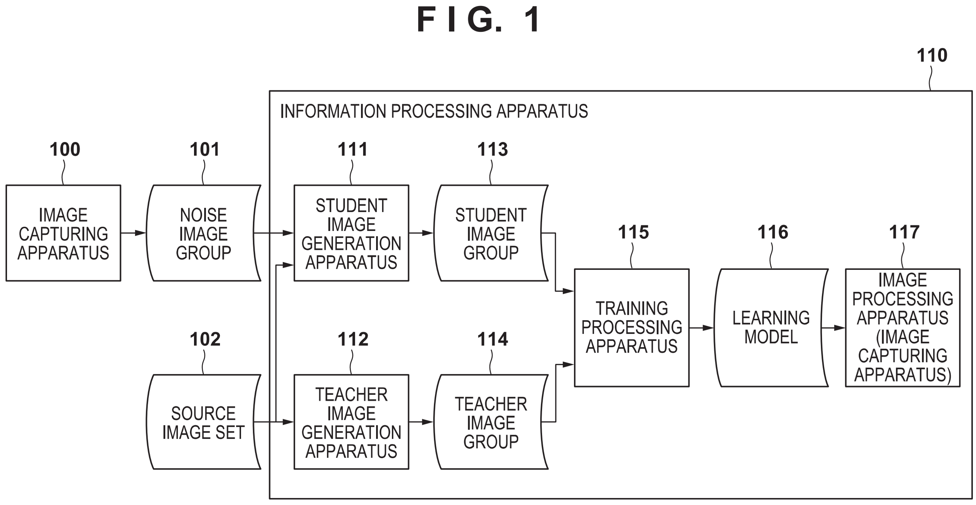

FIG. 1 shows an image processing system. An image capturing apparatus 100 is a digital still camera, a digital video camera, a surveillance camera, or the like that acquires still images or moving images. The image capturing apparatus 100 may be mounted to a satellite or a spacecraft. A noise image group 101 includes a plurality of noise images acquired by the image capturing apparatus 100. Note that, in the case where there are a plurality of image capturing apparatuses 100, the noise image group 101 is generated separately for each of the image capturing apparatuses 100. A source image set 102 is a dataset consisting of a plurality of color images (e.g.: sRGB images or images in device RGB format). This dataset may, for example, be free material available on the Internet. Note that "images in device RGB format" refers to images in sRGB format that have been adjusted to the RGB color gamut displayed on a monitor or the like.

An information processing apparatus 110 is a computer such as a personal computer (PC). In FIG. 1, one information processing apparatus 110 is shown in an all-embracing manner, but, in actuality, the information processing apparatus 110 may be formed by a plurality of computers. The information processing apparatus 110 has a plurality of functions (student image generation apparatus 111, teacher image generation apparatus 112, training processing apparatus 115, and image processing apparatus 117). These functions may be realized by the computers.

The student image generation apparatus 111 generates a student image group 113 from the source image set 102 and the noise image group 101. The student image group 113 includes a plurality of color images to which noise acquired by the image capturing apparatus 100 has been added.

The teacher image generation apparatus 112 generates a teacher image group 114 from the source image set 102. Note that, in the case where the source image set 102 is in demosaic RGB format, the source image set 102 is directly usable as the teacher image group 114. In such a case, the teacher image generation apparatus 112 is omitted.

The training processing apparatus 115 inputs the student image group 113 as student images and the teacher image group 114 as teacher images and generates a learning model 116. For example, a first student image included in the student image group 113 and a first teacher image included in the teacher image group 114 are each generated from a common source image (one source image included in source image set 102). The training processing apparatus 115 generates a first output image by inputting the first student image to the learning model 116, derives an error between the first output image and the first teacher image using an error function, and updates coefficients in the learning model 116 such that the error is minimized. This update processing is executed for the N student images that are included in the student image group 113 and for the N teacher images that are included in the teacher image group 114 and correspond one-to-one to the N student images. A trained learning model 116 is thereby generated.

The image processing apparatus 117 generates output images by using the trained learning model 116 to reduce noise contained in input images. In other words, the image processing apparatus 117 has a noise reduction function. The image processing apparatus 117 may also be the image capturing apparatus 100. In other words, the trained learning model 116 may be written to the image capturing apparatus 100 and noise reduction processing may be executed in the image capturing apparatus 100.

Note that the source image set 102 may be image data in device RGB format, the student image group 113 may be image data in RAW format, and the teacher image group 114 may be image data in device RGB format or demosaic RGB format. In this case, the learning model 116 is a model capable of executing demosaicing (developing) processing and noise reduction processing at the same time. It is sufficient if the learning model 116 is able to realize noise reduction processing. For convenience of description, however, the learning model 116 will be described below as collectively executing demosaicing (developing) processing and noise reduction processing.

### (2) Structure of Image Capturing Apparatus

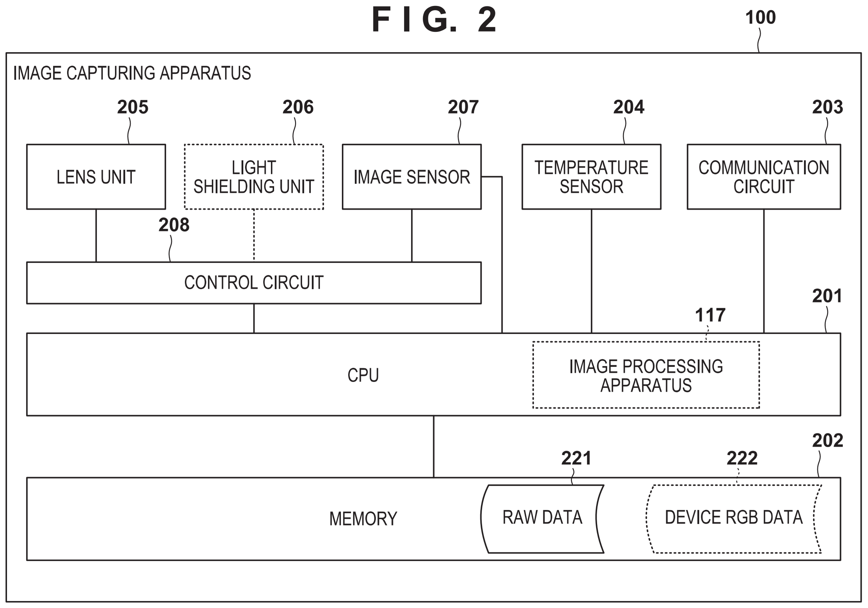

FIG. 2 shows the structure of the image capturing apparatus 100. A CPU 201 is a processor that controls the image capturing apparatus 100 in accordance with a control program stored in a memory 202. An image processing function and the like of the CPU 201 may be realized by a hardware circuit such as an Application-Specific Integrated Circuit (ASIC). A lens unit 205 has, for example, an optical lens, a focus adjustment function, and a zoom function. The focus adjustment function and the zoom function may be omitted. A light shielding unit 206 is also optional and has a light shielding mechanism such as a diaphragm or a mechanical shutter. The amount of light shielded may be adjusted by moving a light shielding plate or diaphragm blades with a motor or the like. An image sensor 207 is a semiconductor device that converts optical signals into electrical signals, such as a CMOS image sensor. CMOS stands for Complementary Metal Oxide Semiconductor. A temperature sensor 204 detects the temperature of the image capturing apparatus 100 and, in particular, the temperature of the image sensor 207. A communication circuit 203 is a communication circuit for communicating with the information processing apparatus 110. The communication circuit 203 may communicate directly with the information processing apparatus 110, or indirectly via an access point, a base station, or the like. The control circuit 208 controls focusing or the focal length of the lens unit 205, the amount of light shielded by the light shielding unit 206, the exposure time (shutter speed) and sensitivity of the image sensor 207, and the like, in accordance with instructions from the CPU 201. The CPU 201 generates RAW data 221 based on an image signal output from the image sensor 207 and stores the RAW data 221 in the memory 202. The memory 202 can include a read-only memory (ROM), a random access memory (RAM), and a memory card. The CPU 201 may transmit the RAW data 221 to the information processing apparatus 110 with the communication circuit 203. The image processing apparatus 117 may be installed in the image capturing apparatus 100. In this case, the image processing apparatus 117 develops a mosaic image (e.g.: RAW data 221) and generates a demosaiced color image (device RGB data 222). Note that the device RGB data 222 may be image data in demosaic RGB format. Also, the CPU 201 saves image capturing conditions (e.g.: temperature, sensitivity, exposure time, focal length of image capturing apparatus 100) applied when acquiring the RAW data 221 to the memory 202 in association with the RAW data 221. Hereinafter, the file format of the RAW data 221 is assumed to include both image data and image capturing conditions.

### (3) Structure of Information Processing Apparatus

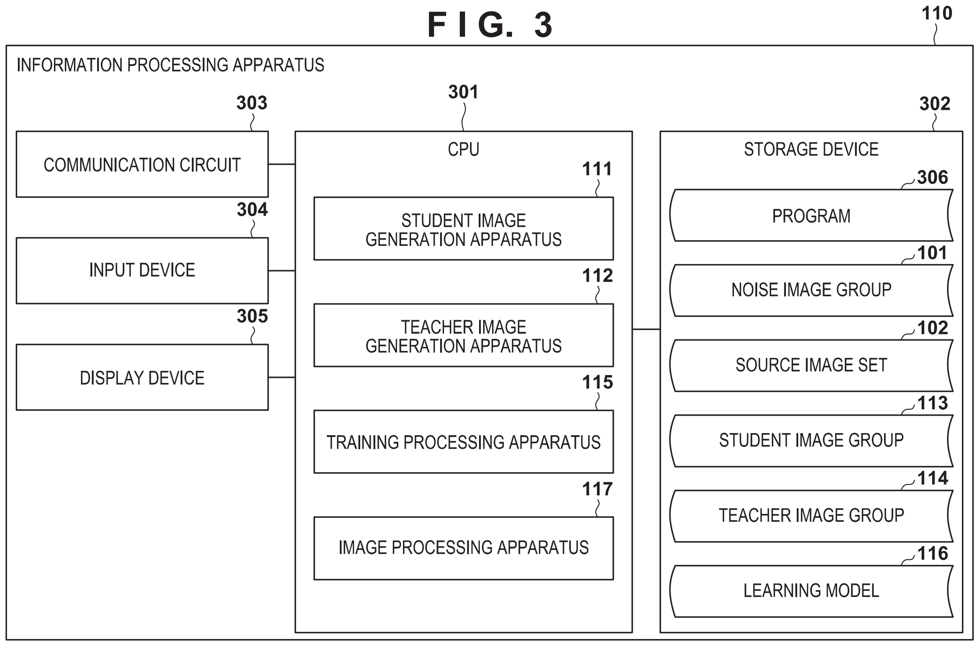

FIG. 3 shows the structure of the information processing apparatus 110. A CPU 301 controls the information processing apparatus 110 in accordance with a program 306 stored in a storage device 302. The CPU 301 may realize the student image generation apparatus 111, the teacher image generation apparatus 112, the training processing apparatus 115, and the image processing apparatus 117, by executing the program 306. A communication circuit 303 is a circuit for communicating with the image capturing apparatus 100. An input device 304 is a pointing device, a keyboard, or the like, and receives instructions from the user. The display device 305 is a display that displays information to the user.

The storage device 302 is, for example, a storage device that stores a ROM, a RAM, a memory card, a solid-state drive (SSD), and a hard disk drive (HDD). The storage device 302 may further store the noise image group 101, the source image set 102, the student image group 113, the teacher image group 114, and the learning model 116.

### (4) Functions of Image Processing Apparatus

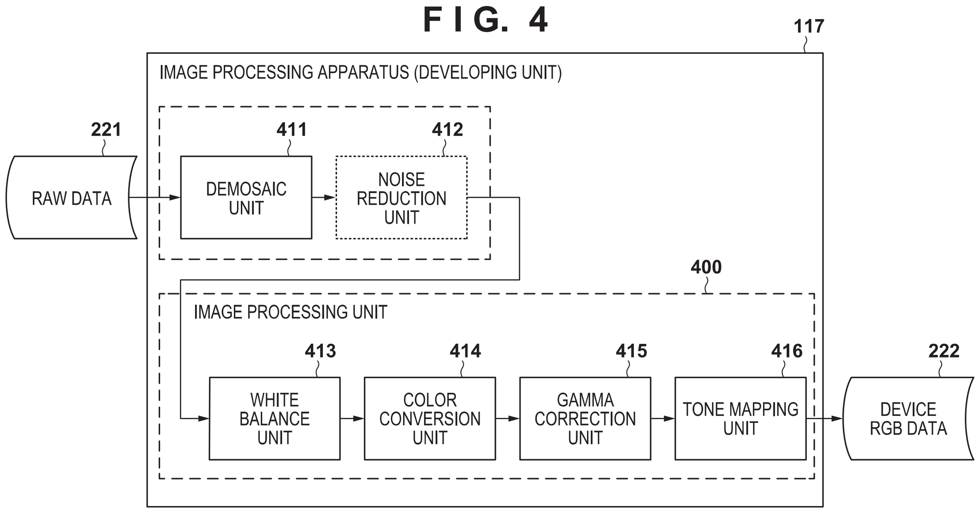

FIG. 4 shows functions of the image processing apparatus 117. A demosaic unit 411 performs demosaic processing on the RAW data 221, which is a Bayer-type mosaic image, and generates a demosaiced image. As is well known, demosaic processing includes processing for interpolating the pixel value of a pixel-of-interest from the pixel values of neighboring pixels of the same color. A noise reduction unit 412 reduces noise contained in the demosaiced image. This "noise" refers to noise that occurs in electrical circuitry provided between the image sensor 207 and the CPU 201. Demosaiced images can contain various noise, such as noise caused by heat from the image sensor 207, noise that occurs due to radiation such as cosmic radiation with which the image sensor 207 is irradiated, noise caused by variability in analog gain, and noise that occurs due to differences in cell sensitivity, for example. Also, if noise is reduced by the noise reduction unit 412, false signals that occur due to noise during processing by the CPU 201 or the CPU 301, such as false colors that can be caused by demosaic processing, can also be reduced. In the present embodiment, the learning model 116 operates as at least the noise reduction unit 412 but may operate as both the demosaic unit 411 and the noise reduction unit 412. The noise reduction unit 412 reduces the noise of the demosaiced image to generate a noise-reduced image.

An image processing unit 400 executes image processing for generating a color image (device RGB data 222) from the output image that is output from the noise reduction unit 412. For example, the image processing unit 400 has a white balance unit 413, a color conversion unit 414, a gamma correction unit 415, a tone mapping unit 416, and the like. This is merely an example, however, and the image processing unit 400 may have at least one of the above or may have different image processing functions from the above. Alternatively, the image processing unit 400 may be omitted. Note that the case where the image processing unit 400 has at least one of the above includes, for example, the case where only the white balance unit 413 is provided, and the case where the tone mapping unit 416 is omitted and the remaining three functions are provided.

Hereinafter, as an example, the image processing unit 400 is described as having the white balance unit 413, the color conversion unit 414, the gamma correction unit 415, and the tone mapping unit 416.

The white balance unit 413 adjusts the white balance of the noise-reduced color image (e.g.: image data in demosaic RGB format) output from the noise reduction unit 412. Note that "demosaic RGB format" refers to the format of image data output from the noise reduction unit 412 (image data before being processed by white balance unit 413, color conversion unit 414, gamma correction unit 415, and tone mapping unit 416), including linear RGB format or sRGB format. The color conversion unit 414 converts the color of color images adjusted for white balance. For example, the color conversion unit 414 corrects (converts) the color of input color images, using a color correction matrix. The gamma correction unit 415 corrects the tone characteristics of color images output from the color conversion unit 414. In order to accurately reproduce the color tones with an output device, the tone mapping unit 416 derives the range of tones included in the color images output from the gamma correction unit 415, remaps the tones of the color image to a color gamut having a narrow range that depends on the output device, and generates device RGB data 222.

### (5) Teacher Image Generation Apparatus

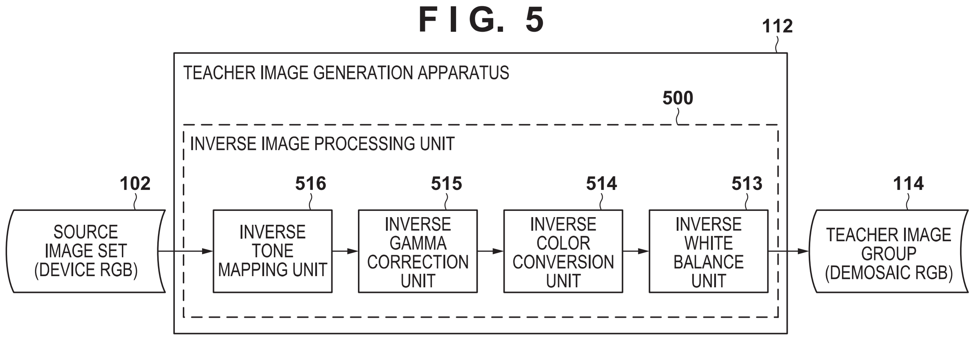

FIG. 5 shows functions of the teacher image generation apparatus 112. An inverse image processing unit 500 executes image processing for generating the teacher image group 114 from the source image set 102. The inverse image processing unit 500 is configured to execute inverse conversion processing of the image processing executed in the image processing unit 400. For example, the inverse image processing unit 500 has an inverse white balance unit 513, an inverse color conversion unit 514, an inverse gamma correction unit 515, and an inverse tone mapping unit 516. This is merely an example, however, and the inverse image processing unit 500 may have at least one of the above or may have different image processing functions from the above. Alternatively, the inverse image processing unit 500 may be omitted. In any case, the inverse image processing unit 500 is paired with the image processing unit 400 and need only be configured to execute the opposite image processing (may also be referred to as inverse image processing or inverse conversion) to the image processing in the image processing unit 400. In extraordinary cases, the image processing unit 400 is omitted, and the inverse image processing unit 500 is also omitted in response.

Here, as an example, the opposite image processing (may also be referred to as inverse image processing or inverse conversion) of the teacher image generation apparatus 112 basically involves executing the opposite image processing to the image processing executed by the white balance unit 413, the color conversion unit 414, the gamma correction unit 415, and the tone mapping unit 416 in the image processing apparatus 117. The output images that are output by the learning model 116 are color images (e.g.: image data in demosaic RGB format) processed by the demosaic unit 411 and the noise reduction unit 412. Accordingly, as teacher images, color images (e.g.: image data in demosaic RGB format) before being processed by the white balance unit 413, the color conversion unit 414, the gamma correction unit 415 and the tone mapping unit 416 are required.

The inverse tone mapping unit 516 executes inverse tone mapping on each of the color images included in the source image set 102 that is input. The inverse gamma correction unit 515 executes inverse gamma correction on the color images output from the inverse tone mapping unit 516. The inverse color conversion unit 514 executes inverse color conversion on the color images output from the inverse gamma correction unit 515. The inverse white balance unit 513 executes inverse white balance processing on the color images output from the inverse color conversion unit 514. A teacher image group 114 (e.g.: image data in demosaic RGB format) that can be compared with output images that are output by the learning model 116 is thereby generated.

### (6) Training Processing Apparatus

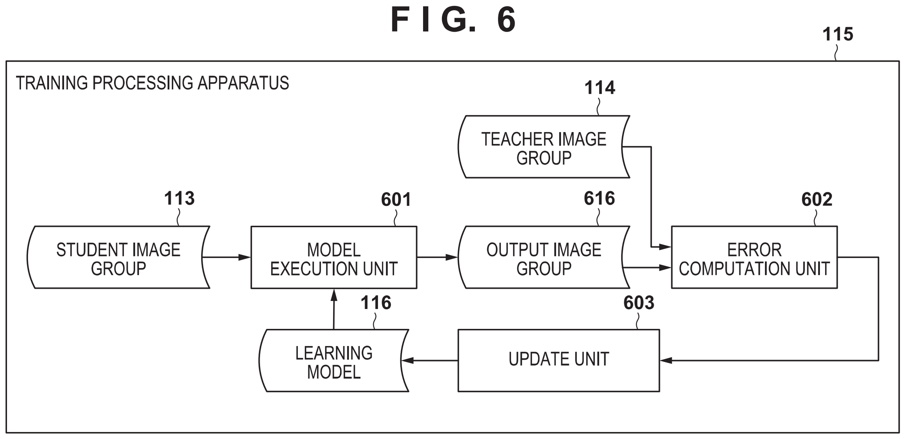

FIG. 6 shows functions of the training processing apparatus 115. The learning model 116 is a model that is based on a neural network, and outputs an output image group 616 to an output layer, based on the student image group 113 provided to an input layer. An intermediate layer (hidden layer) is provided between the input layer and the output layer, and a plurality of nodes exist in the intermediate layer. When data is passed from one node to the next node, coefficients (weights) are multiplied therewith. Accordingly, the learning model 116 may be viewed as a set of coefficients (weights applied between nodes in a neural network). A model execution unit 601 inputs the student image group 113 to the learning model 116 and outputs the output image group 616. A plurality of pixels (pixel values) from the output layer form a single output image.

An error computation unit 602 derives an error from the output image group 616 and the teacher image group 114 and passes the error to an update unit 603. Note that each error is derived from one output image included in the output image group 616 and one teacher image of the teacher image group 114. Here, the source image that served as the source of the input image (student image) serving as the source of the one output image is the same as the source image that served as the source of the one teacher image. In other words, the student image and the teacher image may be managed in association with the identification information of a common source image.

The update unit 603 updates the coefficients in the learning model 116, such that the error output from the error computation unit 602 decreases. Note that the error is derived per pixel. Note also that the error decreases as learning progresses.

### (7) Student Image Generation Apparatus

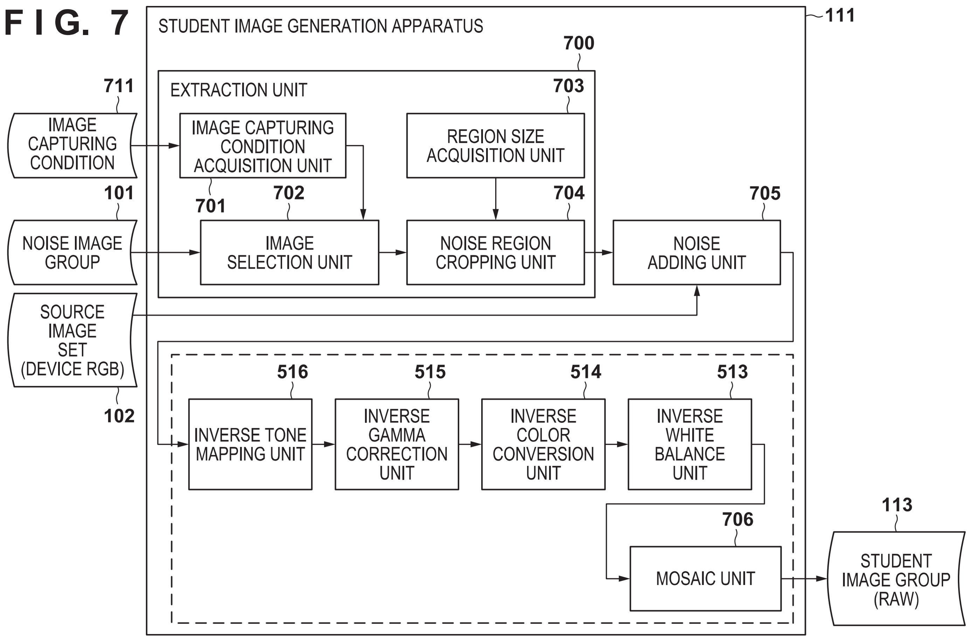

FIG. 7 shows the structure of the student image generation apparatus. An extraction unit 700 extracts, from the noise image group 101, noise regions added to each source image included in the source image set 102. The extraction unit 700 is constituted by, for example, an image capturing condition acquisition unit 701, an image selection unit 702, a region size acquisition unit 703, and a noise region cropping unit 704.

Each of the noise images included in the noise image group 101 is an image acquired from an element through which only dark current flows in the image sensor 207. The amount of dark current can vary depending on image capturing conditions and individual differences between image capturing apparatuses 100. The image capturing conditions at the time at which the respective noise images included in the noise image group 101 are acquired by the image capturing apparatus 100 may be the same, or similar, or completely different. In view of this, a plurality of noise images acquired under very close image capturing conditions are required. For example, a plurality of noise images acquired under image capturing conditions close to image capturing conditions under which the user would actually want to reduce noise may be required. The image capturing condition acquisition unit 701 acquires an image capturing condition 711 of each of the noise images included in the noise image group 101 from the storage device 302. In the case where the file format of the noise images is a file format that can include image capturing conditions, the image capturing condition acquisition unit 701 acquires the image capturing condition 711 from the file format together with the noise images. The image selection unit 702 compares the image capturing conditions 711 of the noise images included in the noise image group 101 and selects a plurality (e.g.: a predetermined number) of noise images whose image capturing conditions 711 are the same or similar to each other. The region size acquisition unit 703 acquires the size of the noise region to be cropped of the noise images. Note that the size of the noise region may be a fixed value or may be dynamically determined according to the size of the teacher image.

The noise region cropping unit 704 crops the noise region from each selected noise image. In other words, the noise region is smaller in size than the noise image.

A noise adding unit 705 generates student images by adding the noise regions extracted by the extraction unit 700 to the source images. A student image group 113 consisting of a plurality of student images to which noise inherent to the image capturing apparatus 100 has been added is thereby generated from the source images included in the source image set 102.

Note that, in actuality, given that the images output from the noise adding unit 705 are color images (device RGB), inverse image processing (linearization processing) and mosaic processing are required. Thus, a mosaic unit 706 is required downstream of the noise adding unit 705, in addition to the inverse tone mapping unit 516, the inverse gamma correction unit 515, the inverse color conversion unit 514, and the inverse white balance unit 513 described above. The inverse tone mapping unit 516 executes inverse tone mapping on the color images to which noise has been added that are input from the noise adding unit 705. The inverse gamma correction unit 515 executes inverse gamma correction on the color images output from the inverse tone mapping unit 516. The inverse color conversion unit 514 executes inverse color conversion on the color images output from the inverse gamma correction unit 515. The inverse white balance unit 513 executes inverse white balance processing on the color images output from the inverse color conversion unit 514. The mosaic unit 706 generates student images by converting the color images into mosaic images (Bayer images). The student image group 113 is generated by applying inverse image processing to the source images included in the source image set 102. This is merely an example, however, and image information in RAW format may be included in the source image set 102, or the source image set 102 may be in demosaic RGB format. In these cases, the inverse image processing unit may have at least one of the above or may have different image processing functions from the above. Alternatively, the inverse image processing unit may be omitted. In any case, the inverse image processing unit is paired with an image processing unit and need only be configured to execute the opposite image processing (may also be referred to as inverse image processing or inverse conversion) to the image processing in the image processing unit. In extraordinary cases, the image processing unit may be omitted, and the inverse image processing unit may also be omitted in response.

### (8) Demosaic Processing

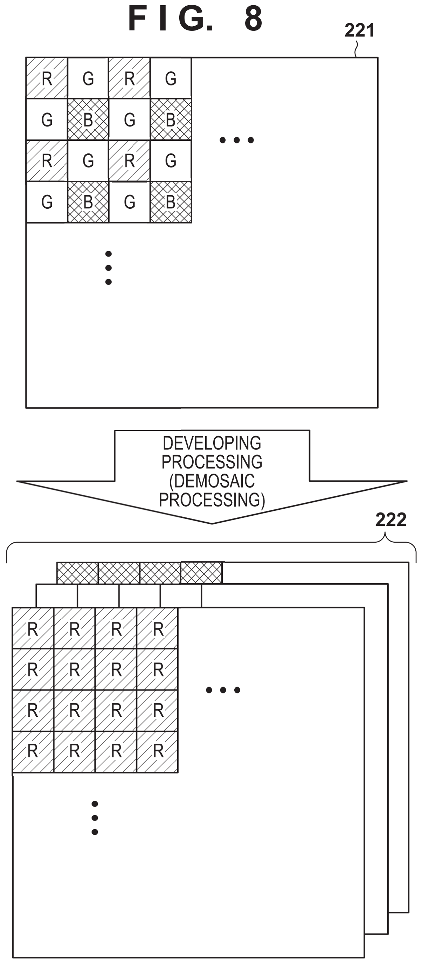

FIG. 8 shows demosaic processing that is executed by the demosaic unit 411. The RAW data 221 generated by the image sensor 207 having a Bayer pattern color filter is a Bayer image (mosaic image). In a Bayer image, there are missing pixels in each of R, G, and B. In view of this, in the developing processing (demosaic processing), the pixel values of missing pixels are interpolated using the pixel values of neighboring pixels. Color images (e.g.: device RGB data 222) are thereby obtained. False colors may occur if the accuracy of the interpolation operation is low.

### (9) Acquisition of Noise Images

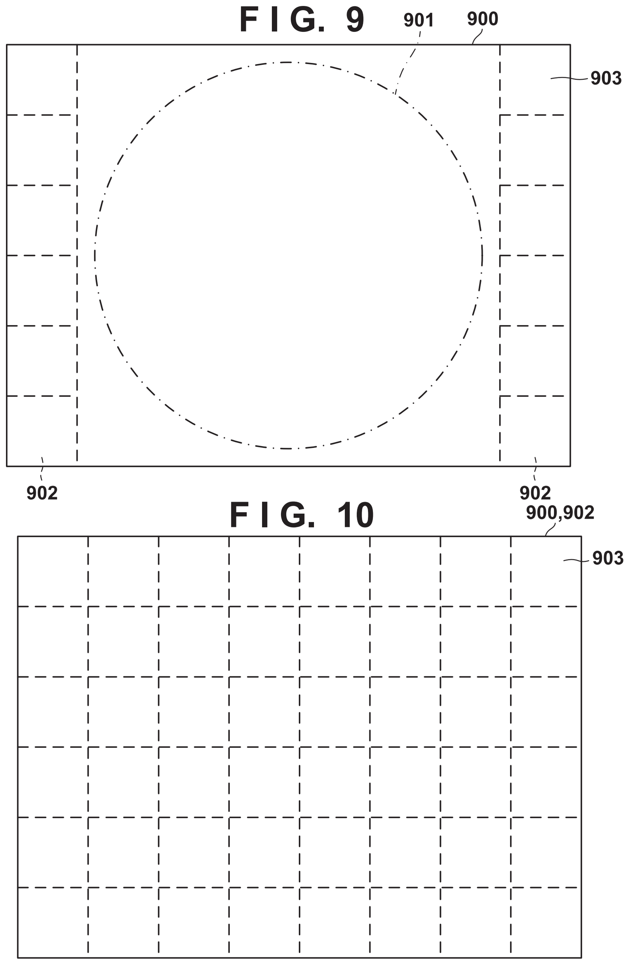

FIG. 9 shows a method of acquiring noise images. "Noise images" as referred to below are images that contain noise. In contrast, "noise regions" are pixel regions containing noise that are cut out of the noise images and are composited with the source images when generating student images from a set of source images. Note that, given that the noise region is part of a noise image, the noise region may also be referred to as a noise image. A pixel region 900 is a region in which a plurality of photoelectric conversion elements are disposed in the image sensor 207. An image circle 901 is a region in which light that has passed through the lens unit 205 forms an image. The image circle 901 changes according to the focal length of the lens unit 205. In the lens unit 205 having a fixed focal length, the size of the image circle 901 is substantially constant. In the example shown in FIG. 9, there is a pixel region that is not irradiated with light on the outer side of the image circle 901. Such a pixel region may be referred to as an optical black region 902. Given that the optical black region 902 is not irradiated with light, only dark current flows through the photoelectric conversion elements provided in that region. In other words, an image consisting only of noise components is generated in the optical black region 902. In this example, a plurality of noise regions 903 are cut out of the optical black region 902. In FIG. 9, the optical black region 902 is parallel to the short side of the pixel region 900, but the optical black region 902 may be parallel to the long side of the pixel region 900.

FIG. 10 shows that, by intentionally shielding light with the light shielding unit 206 described with FIG. 1, the entire pixel region 900 can be constituted as the optical black region 902. In the example in FIG. 10, through requiring the light shielding unit 206, a large number of samples (noise regions 903) can be cut out with one iteration of image capturing.

### (10) Method for Adding Noise

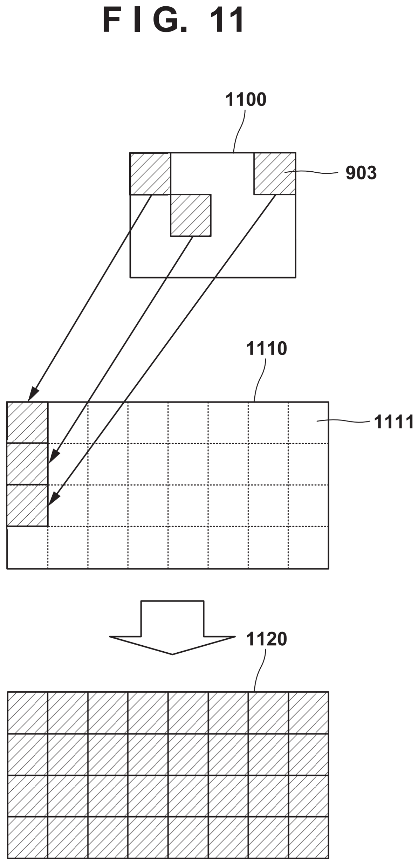

FIG. 11 shows a student image 1120 to which noise has been added being generated from a noise image 1100 and a source image 1110. Here, it is assumed that the source image 1110 is logically divided into a plurality of pixel regions 1111, and that each pixel region 1111 is equal in size to the noise region 903. The CPU 301 determines the cropped size of the noise region 903, based on the size of the pixel region 1111.

In this example, a plurality of noise regions 903 are extracted from a single noise image 1100. Each of the noise regions 903 is composited with a different one of the pixel regions 1111 constituting the source image 1110. The relationship between the noise regions 903 and the pixel regions 1111 may be determined randomly or may be determined based on certain rules. Using randomization can suppress the overtraining on specific noise.

In this example, a plurality of noise regions 903 are extracted from a single noise image 1100, but this is merely an example.

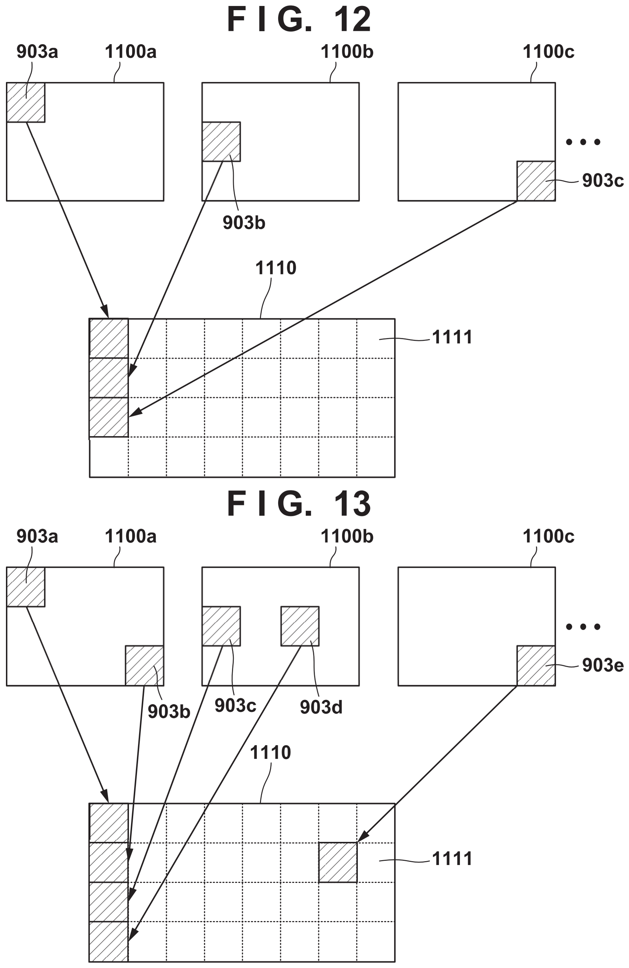

FIG. 12 shows single noise regions 903 being extracted from single noise images 1100. According to FIG. 12, a single noise region 903a is extracted from a noise image 1100a. A single noise region 903b is extracted from a noise image 1100b. A single noise region 903c is extracted from a noise image 1100c.

In this case, the positions of the single noise regions 903a, 903b, and 903c extracted from the single noise images 1100a, 1100b, and 1100c may be the same or may be different. In the latter case, the positions of the noise regions 903a, 903b, and 903c may be determined randomly so as to not overlap each other. This will also likely help to suppress overtraining.

The number of noise regions 903 extracted from each of the noise images 1100a, 1100b, 1100c, and so on may differ, as illustrated by FIG. 13. In this example, two noise regions 903a and 903b are extracted from the noise image 1100a. Two noise regions 903c and 903d are extracted from the noise image 1100b. A single noise region 903e is extracted from the noise image 1100c. The positions of the noise regions 903 extracted from each noise image 1100 may be fixed or different. In the latter case, the extraction positions may be determined randomly.

In this way, the student image 1120 is completed by compositing the noise regions 903 with the entirety of the single source image 1110. In actuality, however, the student image 1120 is completed by thereafter applying inverse image processing and mosaic processing.

### (11) Flowcharts

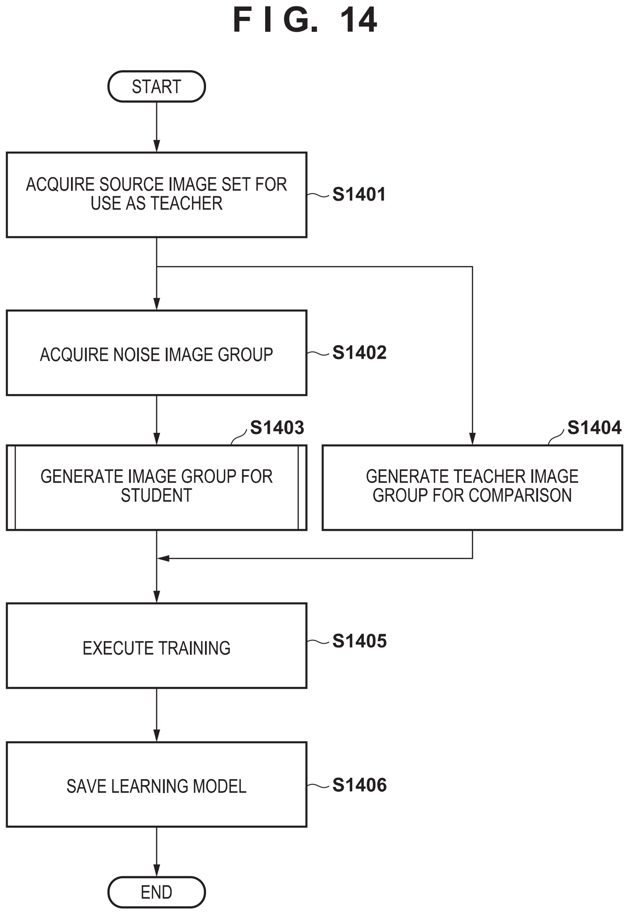

FIG. 14 is a flowchart showing processing for training the learning model 116 that is executed by the CPU 301 of the information processing apparatus 110.

In step S1401, the CPU 301 (student image generation apparatus 111, teacher image generation apparatus 112) acquires the source image set 102 for use in training from the storage device 302.

In step S1402, the CPU 301 (student image generation apparatus 111) acquires the noise image group 101 from the image capturing apparatus 100.

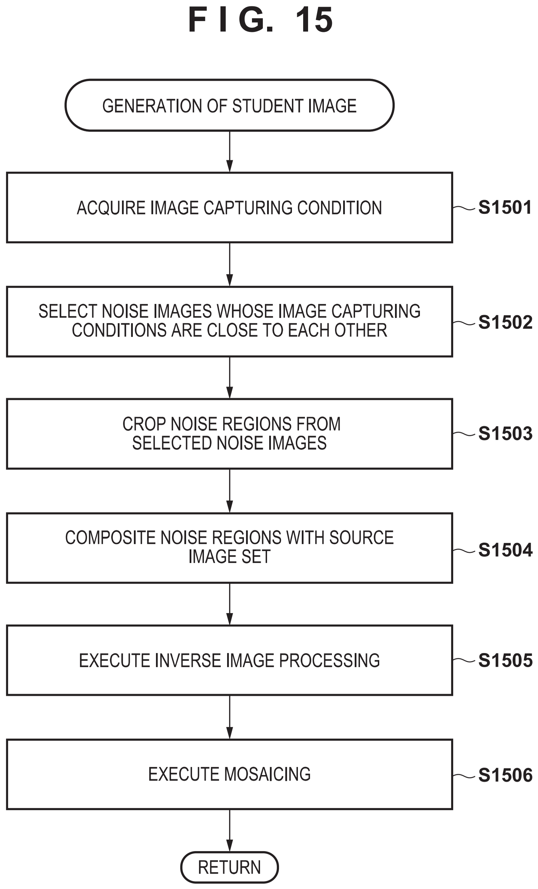

In step S1403, the CPU 301 (student image generation apparatus 111) generates the student image group 113, based on the source image set 102 and the noise image group 101. A detailed example of step S1403 will be described later using FIG. 15.

In step S1404, the CPU 301 (teacher image generation apparatus 112) generates the teacher image group 114 for use in comparison from the source image set 102. Note that step S1404 need only be executed between steps S1401 and S1405. Step S1404 may be executed before steps S1402 and S1403, or after steps S1402 and S1403, or in parallel with steps S1402 and S1403.

In step S1405, the CPU 301 (training processing apparatus 115) trains the learning model 116, using the student image group 113 and the teacher image group 114 for use in comparison.

In step S1406, the CPU 301 saves the trained learning model 116 to the storage device 302. The trained learning model 116, in the case where the image processing apparatus 117 is installed in the image capturing apparatus 100, the trained learning model 116 is transmitted to the image capturing apparatus 100 via the communication circuit 303. The image capturing apparatus 100 receives the trained learning model 116 through the communication circuit 203 and saves the trained learning model 116 to the memory 202.

FIG. 15 is a flowchart detailing the processing for generating a student image.

In step S1501, the CPU 301 (image capturing condition acquisition unit 701) acquires the image capturing condition 711 of each of the noise images 1100 included in the noise image group 101.

In step S1502, the CPU 301 (image selection unit 702) compares the image capturing conditions 711 of the noise images 1100 and selects a plurality of noise images whose image capturing conditions 711 are close to each other. Here, the number of noise images that are selected may be predetermined. Alternatively, a range in which the image capturing conditions 711 can be determined to be close to each other may be predetermined, and a plurality of image capturing conditions 711 within that range may be selected. For example, if the image capturing condition 711 is the temperature (image capturing temperature) when the noise image 1100 was acquired, a plurality of noise images 1100 associated with image capturing temperatures that are greater than or equal to a lower temperature limit and less than an upper temperature limit are selected.

In step S1503, the CPU 301 (noise region cropping unit 704) cuts out the noise regions 903 from the selected noise images 1100.

In step S1504, the CPU 301 (noise adding unit 705) composites the noise regions 903 with the source image set 102. In other words, the noise regions 903 are respectively composited with the source images 1110 included in the source image set 102. Color images to which noise has been added are thereby formed.

In step S1505, the CPU 301 (inverse tone mapping unit 516, inverse gamma correction unit 515, inverse color conversion unit 514, and inverse white balance unit 513) executes inverse image processing on the color images to which noise has been added.

In step S1506, the CPU 301 (mosaic unit 706) executes mosaicing of the color images to which inverse image processing has been applied. The student images 1120 are thereby generated.

### (12) Variations of Position of Noise Adding Unit

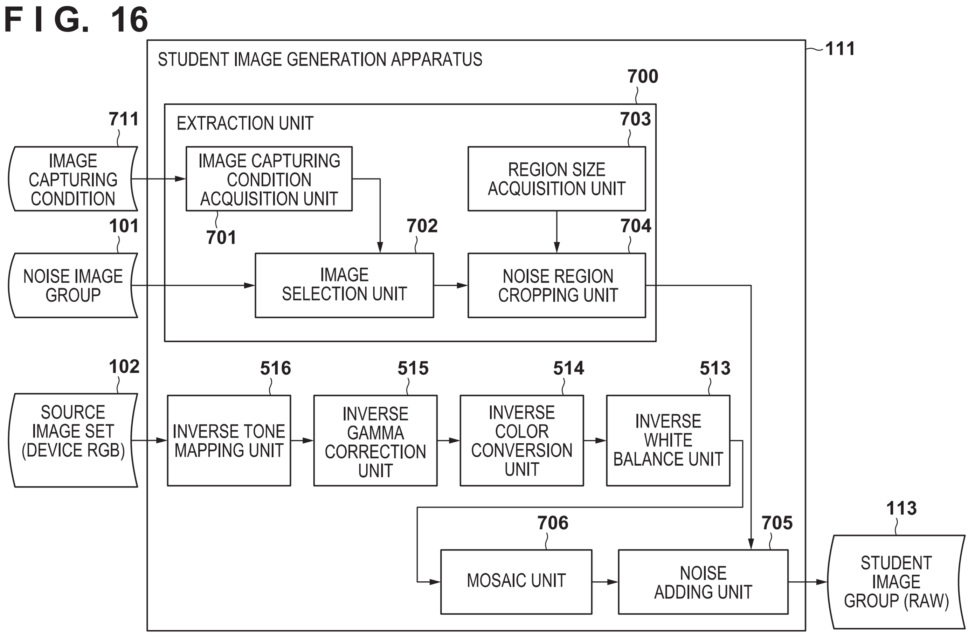

For example, in FIG. 7, the noise adding unit 705 is disposed upstream of the inverse tone mapping unit 516, but this is merely an example. FIG. 16 shows an example in which the noise adding unit 705 is disposed downstream of the mosaic unit 706. In this case, the inverse tone mapping unit 516 executes inverse tone mapping on the source images 1110 included in the source image set 102. Also, the inverse gamma correction unit 515 processes the output images of the inverse tone mapping unit 516. The inverse color conversion unit 514 processes the output images of the inverse gamma correction unit 515. The inverse white balance unit 513 processes the output images of the inverse color conversion unit 514. The mosaic unit 706 processes the output images of the inverse white balance unit 513. The noise adding unit 705 composites the noise regions 903 with the output images of the mosaic unit 706. The student image group 113 to which noise has been added may thereby be generated.

Secondary false signals occur due to downstream image processing being applied to noise components. From the viewpoint of favorably reproducing secondary false signals, it may be preferable for noise to be sampled at the stage at which image data in device RGB format is obtained. From this viewpoint, the noise adding unit 705 need only be disposed anywhere from upstream of the inverse tone mapping unit 516 to upstream of the mosaic unit 706. For example, in FIG. 16, the noise adding unit 705 may be disposed between the inverse tone mapping unit 516 and the inverse gamma correction unit 515. In FIG. 16, the noise adding unit 705 may also be disposed between the inverse gamma correction unit 515 and the inverse color conversion unit 514. In FIG. 16, the noise adding unit 705 may also be disposed between the inverse color conversion unit 514 and the inverse white balance unit 513. In FIG. 16, the noise adding unit 705 may also be disposed between the inverse white balance unit 513 and the mosaic unit 706. In other words, noise images may be added to the input images of the inverse tone mapping unit 516, or to the input images of the inverse gamma correction unit 515, or to the input images of the inverse color conversion unit 514, or to the input images of the inverse white balance unit 513, or to the input images of the mosaic unit 706, or to the output images of the mosaic unit 706.

Note that the point at which sampling of the noise images 1100 is performed corresponds to the disposition of the noise adding unit 705.

### (13) Comparison of Effects

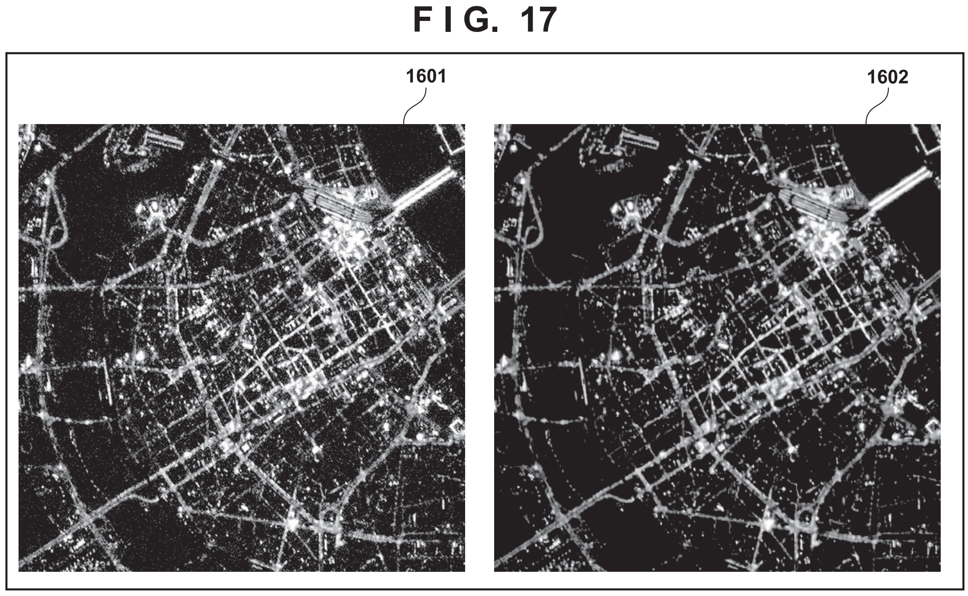

FIG. 17 is a diagram illustrating the effects of the present embodiment. An image 1601 indicates an image output as a result of an image captured by the image capturing apparatus 100 mounted to a satellite being input to the learning model 116 (i.e., learning model having only a demosaic function) trained on student images to which noise has not been added. An image 1602 indicates an image output as a result of an image captured by the image capturing apparatus 100 mounted to a satellite being input to the learning model 116 (i.e., learning model having a demosaic function and a noise reduction function) trained on student images to which noise has been added. In the image 1601, there is evidently residual noise. In the image 1602, noise has evidently been reduced by the learning model 116. In this way, noise is accurately reduced by training the learning model 116 on student images generated using noise images acquired by the image capturing apparatus 100.

### (14) Technical Ideas derived from Embodiment

### Aspect 1

The information processing apparatus 110 is an example of an image processing apparatus that generates a learning model 116 that reduces noise contained in images acquired by a predetermined image capturing apparatus 100. The CPU 301 and the extraction unit 700 operate as extraction means for extracting, as a noise image (noise image 1100, noise region 903), an image of an optical black region (e.g.: optical black region 902, light-shielded pixel region 900) that is included in each of a plurality of images captured by the predetermined image capturing apparatus 100 and is not irradiated with light that has passed through the optical system (e.g.: lens unit 205) of the predetermined image capturing apparatus 100. The CPU 301 and the noise adding unit 705 operate as compositing means for compositing the noise image with a teacher image (e.g.: source image set 102) to generate a student image (e.g.: student image group 113). The CPU 301 and the training processing apparatus 115 operate as training means for training the learning model by providing the student image to the learning model 116 as input.

According to Aspect 1, a learning model 116 capable of reducing noise more easily and accurately than was previously possible is provided. In particular, student images are generated using actual noise images acquired by the image capturing apparatus 100 that generates images targeted for noise reduction. In other words, the generation source of the noise images is the same as the generation source of the images targeted for noise reduction, and thus a high noise reduction effect is expected. Note that, as a training technique, a technique such as updating the learning model such that output images that are output from the learning model 116 approximate the teacher images may be adopted. For example, a technique such as updating the learning model (weighted coefficients) such that the difference (error) between the output images that are output from the learning model 116 and the teacher images decreases may be adopted.

### Aspect 2

Aspect 2 may be combined with Aspect 1. As illustrated by FIGS. 11 to 13, a teacher image (source image 1110) may be constituted by a plurality of partial images (pixel regions 1111) that are smaller in size than the teacher image. As illustrated by FIG. 12, the compositing means (noise adding unit 705) may generate a student image by compositing each of a plurality of noise images (noise regions 903) acquired one each from the images captured by the predetermined image capturing apparatus 100 with a different one of the plurality of partial images constituting the teacher image. Overtraining on a specific noise image 1100 will thereby be less likely to occur and a high noise reduction effect will likely be obtained.

### Aspect 3

Aspect 3 may be combined with Aspect 2. As described in association with FIGS. 11 to 13, the compositing means (noise adding unit 705) may randomly select, from the plurality of noise images, noise images to be respectively applied to the plurality of partial images. Overtraining on a specific noise image 1100 will thereby be less likely to occur and a higher noise reduction effect will likely be obtained.

### Aspect 4

Aspect 4 may be combined with Aspect 3. The noise images to be respectively applied to the plurality of partial images may be selected to not overlap each other. Overtraining on a specific noise image 1100 will thereby be less likely to occur and an even higher noise reduction effect will likely be obtained.

### Aspect 5

Aspect 5 may be combined with any of Aspects 1 to 4. The plurality of images (e.g.: noise images 1100a, 1100b, ...) from which a plurality of noise images to be used in generating a single student image are extracted are respectively acquired by the predetermined image capturing apparatus 100 under the same image capturing conditions. Images with similar noise occurrence tendencies are thereby obtained if the image capturing conditions are uniform. Therefore, by selecting a plurality of noise images with uniform image capturing conditions, a learning model 116 with a higher noise reduction effect will likely be obtained.

### Aspect 6

Aspect 6 may be combined with Aspect 5. The image capturing conditions may include at least one of a temperature, a sensitivity, and an exposure time of the predetermined image capturing apparatus 100. These parameters contribute to the occurrence of noise and are thus appropriate as criteria for selecting noise images.

### Aspect 7

Aspect 7 may be combined with any of Aspects 1 to 6. The image that is input to the trained learning model 116 may be a mosaic image. The output image that is output from the learning model 116 may be a demosaic image corresponding to the mosaic image. In other words, when a mosaic image is input, the trained learning model 116 outputs a demosaic image corresponding to the mosaic image. In this case, the learning model 116 will be a learning model that is able to simultaneously realize a demosaic function in addition to a noise reduction function. The above-mentioned learning model 116 may, however, be a model that is provided with a noise reduction function with color images (e.g.: device RGB) as input and color images (e.g.: device RGB) as output, and that does not include a demosaic function.

### Aspect 8

Aspect 8 may be combined with Aspect 7. The mosaic image may be a Bayer image. Which is to say, a mosaic image other than a Bayer array may be applied.

### Aspect 9

Aspect 9 may be combined with Aspect 8. The Bayer image may be a RAW image. Which is to say, a Bayer image other than a RAW image may be employed.

### Aspect 10

Aspect 10 may be combined with any of Aspects 7 to 9. The compositing means (e.g.: student image generation apparatus 111) may composite the noise images with the teacher image to generate a first image (e.g.: noise adding unit 705), may apply inverse tone mapping processing to the first image to generate a second image (e.g.: inverse tone mapping unit 516), may apply inverse gamma correction to the second image to generate a third image (e.g.: inverse gamma correction unit 515), may apply inverse color conversion to the third image to generate a fourth image (e.g.: inverse color conversion unit 514), may apply inverse white balance processing to the fourth image to generate a fifth image (e.g.: inverse white balance unit 513), and may apply mosaicing to the fifth image to generate a student image, which is a mosaic image (e.g.: mosaic unit 706).

### Aspect 11

Aspect 11 may be combined with Aspect 10. The teacher image generation apparatus 112 operates as generation means for generating, from the teacher image, a comparative image to be compared with the output image in the training means. The generation means (e.g.: teacher image generation apparatus 112) may apply inverse tone mapping processing to the teacher image to generate a sixth image (e.g.: inverse tone mapping unit 516), may apply inverse gamma correction to the sixth image to generate a seventh image (e.g.: inverse gamma correction unit 515), may apply inverse color conversion to the seventh image to generate an eighth image (e.g.: inverse color conversion unit 514), and may apply inverse white balance processing to the eighth image to generate a comparative image (e.g.: inverse white balance unit 513).

### Aspect 12

Aspect 12 may be combined with any of Aspects 7 to 9. As illustrated by FIG. 16, the compositing means (student image generation apparatus 111) may apply inverse tone mapping processing to the teacher image to generate a first image (e.g.: inverse tone mapping unit 516), may apply inverse gamma correction to the first image to generate a second image (e.g.: inverse gamma correction unit 515), may apply inverse color conversion to the second image to generate a third image (e.g.: inverse color conversion unit 514), may apply inverse white balance processing to the third image to generate a fourth image (e.g.: inverse white balance unit 513), may apply mosaicing to the fourth image to generate a fifth image (e.g.: inverse color conversion unit 514), and may composite the noise images with the fifth image to generate a student image, which is a mosaic image (e.g.: noise adding unit 705).

### Aspect 13

Aspect 13 may be combined with any of Aspects 7 to 9. As illustrated by FIGS. 7 and 16, the compositing means (student image generation apparatus 111) may apply inverse tone mapping processing to the teacher image to generate a first image, may apply inverse gamma correction to the first image to generate a second image, may apply inverse color conversion to the second image to generate a third image, may apply inverse white balance processing to the third image to generate a fourth image, and may apply mosaicing to the fourth image to generate a student image, which is a mosaic image. Here, the noise image is composited with one of the first image, the second image, the third image, and the fourth image. For example, in FIG. 7, the noise adding unit 705 is disposed upstream of the inverse tone mapping unit 516, and, in FIG. 16, is disposed downstream of the mosaic unit 706, but these are only illustrative examples. As described in relation to FIG. 16, the noise adding unit 705 may be disposed from upstream of the inverse tone mapping unit 516 to downstream of the mosaic unit 706. In other words, the noise image may be added to the input image of the inverse tone mapping unit 516, may be added to the input image of the inverse gamma correction unit 515, may be added to the input image of the inverse color conversion unit 514, may be added to the input image of the inverse white balance unit 513, may be added to the input image of the mosaic unit 706, or may be added to the output image of the mosaic unit 706.

### Aspect 14

Aspect 14 may be combined with any of Aspects 1 to 13. As illustrated by FIG. 9, the images acquired by the predetermined image capturing apparatus 100 are rectangular images. The noise images (e.g.: noise regions 903) may be extracted from a rectangular optical black region 902 parallel to a short side or a long side of the rectangular images.

### Aspect 15

Aspect 15 may be combined with Aspect 14. As illustrated by FIG. 9, the rectangular optical black region 902 is larger in area than the noise images (e.g.: noise regions 903). The extraction means (e.g.: extraction unit 700) may randomly determine the position of the noise image to be extracted from the rectangular optical black region 902 and extract the noise image from the determined position in the rectangular optical black region 902. Given that the optical black region 902 is a region that is not irradiated with light, this region conceivably contains noise caused by dark current and the like.

### Aspect 16

Aspect 16 may be combined with any of Aspects 1 to 15. The predetermined image capturing apparatus 100 may be a camera mounted to a satellite. In this case, the noise includes bright spot noise that occurs due to incidence of cosmic radiation on the predetermined image capturing apparatus 100. The likelihood of being able to accurately reduce bright spot noise caused by cosmic radiation is thereby increased.

### Aspect 17

The image processing apparatus 117 functions as a noise reduction apparatus that reduces noise contained in input images. The communication circuits 203 and 303 function as input means for inputting images acquired by the predetermined image capturing apparatus 100, as input images, to the trained learning model 116 generated by the image processing apparatus described in any one of Aspects 1 to 16. The CPUs 201 and 301 function as acquiring means for acquiring, from the learning model 116, output images corresponding to the input images input from the input means.

### Aspect 18

The lens unit 205 is an example of an optical system. The image sensor 207 is an example of an image sensor that converts light incident thereon through the optical system into image signals. The CPU 201 and the image processing apparatus 117 are examples of the noise reduction device described in Aspect 17 that reduces noise from images corresponding to image signals acquired by the image sensor. As illustrated by FIG. 9, the long side of the image sensor 207 is longer than the diameter of the image circle 901 of the optical system. The noise regions 903 can thereby be acquired from the optical black region 902, even without the light shielding unit 206.

### Aspect 19

A training method to be executed by an image processing apparatus and for generating a learning model that reduces noise contained in an image acquired by a predetermined image capturing apparatus, the method including:
an extraction step of extracting, as a noise image, an image of an optical black region that is included in each of a plurality of images captured by the predetermined image capturing apparatus and is not irradiated with light that has passed through an optical system of the predetermined image capturing apparatus (e.g.: steps S1501 to S1503);
a compositing step of compositing the noise image with a teacher image to generate a student image (e.g.: steps S1504 to S1506); and
a training step of training the learning model by providing the student image to the learning model as input (e.g.: step S1405).

### Aspect 20

The program 306 is an example of a program that causes a computer to function as the image processing apparatus described in any one of Aspects 1 to 16.

The invention is not limited to the foregoing embodiments, and various variations/changes are possible within the spirit of the invention.

The present application claims the benefit of priority from Japanese Patent Application No. 2023-115444 filed on July 13, 2023, which is hereby incorporated by reference herein in its entirety.

## Claims

1. An image processing apparatus for generating a learning model that reduces noise contained in an image acquired by a predetermined image capturing apparatus, the image processing apparatus comprising:
extraction means for extracting, as a noise image, an image of an optical black region that is included in each of a plurality of images captured by the predetermined image capturing apparatus and is not irradiated with light that has passed through an optical system of the predetermined image capturing apparatus;
compositing means for compositing the noise image with a teacher image to generate a student image; and
training means for training the learning model by providing the student image to the learning model as input.

2. The image processing apparatus according to claim 1,
wherein the teacher image is constituted by a plurality of partial images smaller in size than the teacher image, and
the compositing means generates the student image by compositing each of a plurality of noise images acquired one each from the plurality of images captured by the predetermined image capturing apparatus with a different one of the plurality of partial images constituting the teacher image.

3. The image processing apparatus according to claim 2,
wherein the compositing means randomly selects, from the plurality of noise images, noise images to be respectively applied to the plurality of partial images.

4. The image processing apparatus according to claim 3,
wherein the noise images to be respectively applied to the plurality of partial images are selected to not overlap each other.

5. The image processing apparatus according to any one of claims 1 to 4,
wherein the plurality of images from which a plurality of noise images to be used in generating a single student image are extracted are respectively acquired by the predetermined image capturing apparatus under the same image capturing condition.

6. The image processing apparatus according to claim 5,
wherein the image capturing condition includes at least one of a temperature, a sensitivity, and an exposure time of the predetermined image capturing apparatus.

7. The image processing apparatus according to any one of claims 1 to 6,
wherein an image that is input to the trained learning model generated by the image processing apparatus is a mosaic image, and
an output image that is output from the learning model is a demosaic image corresponding to the mosaic image.

8. The image processing apparatus according to claim 7,
wherein the mosaic image is a Bayer image.

9. The image processing apparatus according to claim 8,
wherein the Bayer image is a RAW image.

10. The image processing apparatus according to any one of claims 7 to 9,
wherein the compositing means
composites the noise images with the teacher image to generate a first image,
applies inverse tone mapping processing to the first image to generate a second image,
applies inverse gamma correction to the second image to generate a third image,
applies inverse color conversion to the third image to generate a fourth image,
applies inverse white balance processing to the fourth image to generate a fifth image, and
applies mosaicing to the fifth image to generate the student image, which is the mosaic image.

11. The image processing apparatus according to claim 10, further comprising:
generation means for generating, from the teacher image, a comparative image to be compared in the training means with the output image,
wherein the generation means
applies inverse tone mapping processing to the teacher image to generate a sixth image,
applies inverse gamma correction to the sixth image to generate a seventh image,
applies inverse color conversion to the seventh image to generate an eighth image, and
applies inverse white balance processing to the eighth image to generate the comparative image.

12. The image processing apparatus according to any one of claims 7 to 9,
wherein the compositing means
applies inverse tone mapping processing to the teacher image to generate a first image,
applies inverse gamma correction to the first image to generate a second image,
applies inverse color conversion to the second image to generate a third image,
applies inverse white balance processing to the third image to generate a fourth image,
applies mosaicing to the fourth image to generate a fifth image, and
composites the noise images with the fifth image to generate the student image, which is the mosaic image.

13. The image processing apparatus according to any one of claims 7 to 9,
wherein the compositing means
applies inverse tone mapping processing to the teacher image to generate a first image,
applies inverse gamma correction to the first image to generate a second image,
applies inverse color conversion to the second image to generate a third image,
applies inverse white balance processing to the third image to generate a fourth image, and
applies mosaicing to the fourth image to generate the student image, which is the mosaic image, and
the noise images are composited with one of the first image, the second image, the third image, and the fourth image.

14. The image processing apparatus according to any one of claims 1 to 13,
wherein the image acquired by the predetermined image capturing apparatus is a rectangular image, and
the noise image is extracted from a rectangular optical black region that is parallel to a short side or a long side of the rectangular image.

15. The image processing apparatus according to claim 14,
wherein the rectangular optical black region is larger in area than the noise image, and
the extraction means
randomly determines a position of the noise image to be extracted from the rectangular optical black region, and
extracts the noise image from the determined position in the rectangular optical black region.

16. The image processing apparatus according to any one of the claims 1 to 15,
wherein the predetermined image capturing apparatus is a camera mounted to a satellite, and
the noise includes bright spot noise that occurs due to incidence of cosmic radiation on the predetermined image capturing apparatus.

17. A noise reduction apparatus for reducing noise contained in an input image, the noise reduction apparatus comprising:
input means for inputting, as an input image, an image acquired by the predetermined image capturing apparatus to the trained learning model generated by the image processing apparatus according to any one of claims 1 to 16; and
acquiring means for acquiring, from the learning model, an output image corresponding to the input image input from the input means.

18. An image capturing apparatus comprising:
an optical system;
an image sensor configured to convert light incident thereon through the optical system into an image signal; and
the noise reduction apparatus according to claim 17 configured to reduce noise from an image corresponding to the image signal acquired by the image sensor,
wherein a long side of the image sensor is longer than a diameter of an image circle of the optical system.

19. A training method to be executed by an image processing apparatus and for generating a learning model that reduces noise contained in an image acquired by a predetermined image capturing apparatus, the training method comprising:
an extracting step of extracting, as a noise image, an image of an optical black region that is included in each of a plurality of images captured by the predetermined image capturing apparatus and is not irradiated with light that has passed through an optical system of the predetermined image capturing apparatus;
a compositing step of compositing the noise image with a teacher image to generate a student image; and
a training step of training the learning model by providing the student image to the learning model as input.

20. A program for causing a computer to function as the image processing apparatus according to any one of the claims 1 to 16.
